# EUROPEAN PATENT APPLICATION

(11) **EP 1 491 570 A1**
(43) Date of publication of application: **29.12.2004**
(21) Application number: 03076988.9
(22) Date of filing: 25.06.2003
(51) Int. Cl.: C08G 63/52, C08G 63/54, C08G 63/553, C09D 167/06

(54) **Powder coating composition for low temperature cure**

(71) Applicant: DSM IP Assets B.V., 6411 TE Heerlen (NL)
(72) Inventor: Van Benthem, Rudolfus Antonius Theodorus Maria, 6141 BR Limbricht (NL); Vermeulen, Jacobus Adriaan Antonius, 6163 MH Geleen (NL); Molhoek, Leendert Jan, 8072 HV Nunspeet (NL)
(74) Representative: Habets, W.J.A.

(57) **Abstract**

This invention relates to unsaturated polyester comprising endomethylenetetrahydrophthalic acid (HIMIC) units, characterised in that the polyester comprises at least 1.1 mmol unsaturation per gram polymer, whereof at least 1 mmol originates from the HIMIC units and at least 0.01 mmol is derived from an α,β-unsaturated acid.

This invention also relates to a novel powder coating composition comprising the novel polyester resin, the process for preparing the powder coating composition, the application of the powder coating composition and substrates coated with the cured powder coating composition.

## Description

### Field of the invention

The present invention lies within the technical field of powder coatings, suitable for coating of heat sensitive substrates.

More specifically, this invention relates to a novel unsaturated polyester resin, a novel powder coating composition comprising the novel polyester resin, the process for preparing the powder coating composition, the application of the powder coating composition and substrates coated with the cured powder coating composition.

### Description of the prior art

Powder coatings are known for a long time, and are widely used in different applications. Usually powder coatings are applied to a substrate, subsequently melted and cured at relatively high temperatures, for example between 160 °C to 220 °C. However, not all substrates can be subjected to such high temperatures. These substrates, for example wood, paper or plastic, are called heat-sensitive substrates. There is a need for powder coating compositions suitable for use on heat-sensitive substrates, which show good flow characteristics at relatively low temperatures and which are stable during production of the powder coating composition and during storage of the powder coating composition.

Currently three types of coating systems are known which can reach cure at low temperatures.

The first type is based on epoxy-polyester hybrid powder coating compositions containing increased catalyst levels. These catalysts are expensive and still the flow characteristics of the composition upon heating are not adequate to obtain good coatings. Furthermore, the presence of increased catalyst levels may result in decreased stability of the powder coating composition.

The second type is based on UV-curable powder coating compositions. These show better flow characteristics at the required applications conditions. However, the application technique is too expensive in relation to the conventionally used wet coatings. Furthermore UV-curable powder coating compositions show difficulties in curing when certain pigments are present in the coating or when matting is needed.

The third type is based on peroxide-polyester powder coating systems. The known types of this system show good reactivity at low temperatures, however the storage stability and the stability during the production of the powder paint do not suffice. To overcome this problem, combinations of peroxide-polyester systems with conventional TGIC cure are known. However, known systems of this type are always a compromise between good reactivity and shelf life. Either the shelf life is good but the reactivity should be improved, or the reactivity is good whilst the shelf life is to be improved

The object of the present invention is to provide a powder paint coating composition curable at relatively low temperatures, for example 100-150 °C, showing good flow properties at the curing temperature, without instability problems during production of the powder coating composition and during storage of the powder coating composition.

### Short description of the invention

The present invention surprisingly fulfils the objective with a novel powder coating composition comprising at least:
(a) a unsaturated polyester resin comprising endomethylene tetrahydrophthalic acid units (HIMIC) and unsaturated groups derived from an α,β-unsaturated acid, and;
(b) an initiator.

A powder coating composition according to the present invention surprisingly may be used at temperatures as low as 100 °C, whilst remaining stable during the production of the powder coating composition and during storage of the powder paint.

### Detailed description of the invention

The powder coating composition according to the invention comprises a unsaturated polyester resin (a) comprising endomethylene tetrahydrophthalic acid units (HIMIC). Preferably the unsaturated polyester resin (a) also comprises unsaturated groups derived from an α,β-unsaturated acid.

Preferably, the weight per unsaturation (WPU) of polyester resin (a) is at least 250 gram per moie of unsaturation (-C=C-), to obtain a coating composition which is stable enough. More preferably the WPU is at least 300 gram per mole unsaturation, even more preferably 325 gram per mole unsaturation and most preferably 350 gram per mole unsaturation. Preferably, the WPU is at most 3000 gram per mole unsaturation to obtain a composition being sufficiently reactive. More preferably the WPU is at most 2000 gram per mole unsaturation, even more preferably 1000 gram per mole unsaturation and most preferably 700 gram per mole unsaturation.

The molar ratio between unsaturated groups derived from a HIMIC unit (HIMIC unsaturations) to other unsaturations, for example from α,β unsaturated acid, is generally larger than 1 : 1, in order to obtain good stability and formation of a good network. The ratio HIMIC unsaturations : other unsaturations is preferably at most 100 : 1, since this has a beneficial effect on the reactivity of the powder coating composition. Preferably the ratio HIMIC unsaturations : other unsaturations is between 50 : 1 and 2 :1, more preferably between 20 : 1 and 5 : 1.

The number average molecular weight (Mn) of the unsaturated polyester (a) lies preferably between 1000 and 5000, more preferably between 2000 and 4000.

The unsaturated polyester (a) may be an amorphous or a semi-crystalline polyester, preferably an amorphous polyester.

The glass transition temperature of the unsaturated polyester (a) may range from 35 up to and including 80 °C, preferably it ranges from 40 up to and including 60 °C. Glass transition temperature is generally measured with known DSC techniques at a temperature increase of 5 °C/min.

The acid value (expressed in mg KOH/g polyester (a)) is preferably smaller than 20, in order to obtain a powder coating composition, reactive enough at low temperatures. More preferably the acid value is lower than 15, most preferably lower than 10. The acid value preferably is higher than 1, more preferably higher than 2.

The hydroxy value (expressed in mg KOH/g polyester (a)) is preferably smaller than 20, in order to obtain a powder coating composition, reactive enough at low temperatures. More preferably the acid value is lower than 15, most preferably lower than 10. The acid value preferably is higher than 1, more preferably higher than 2.

In a preferred embodiment of the invention, both the acid value and the hydroxy value of polyester (a) is lower than 20, preferably lower than 15 and most preferabiy iower than 10. The acid value and the hydroxy value of polyester (a) preferably both are higher than 1, more preferably both higher than 2.

In order to obtain a powder coating composition showing sufficient flow properties at lower temperatures, the viscosity (measured with Emelia at 160 °C) of unsaturated polyester (a) preferably is lower than 50 Pa.s., more preferably lower than 20 Pas and most preferably lower than 10 Pas. The preferred viscosity also depends on the temperature at which the coating will be cured.

In a preferred embodiment of the invention, the unsaturated polyester resin (a) comprises at least 1.1 mmol unsaturation per gram polymer, whereof at least 1 mmol originates from the HIMIC units and at least 0.01 mmol is derived from an α,β-unsaturated acid. Is has been shown that if the amount of unsaturations is lower, a powder coating composition comprising polyester (a) and an initiator (b) is not capable of sufficient cure at very low temperatures. This preferred unsaturated polyester resin (a) of the powder coating composition according to the invention is not known in the prior art.

The unsaturated polyester resin (a) may be obtained in several ways. The polyester (a) is preferably obtained by preparing an unsaturated polyester (a-1) in a first step, based on at least α,β-unsaturated acid and alcohol, followed by a second step wherein (part of) the unsaturations of the unsaturated acid is reacted with cyclopentadiene (CPD) at a temperature between about 160 °C and 220 °C thereby forming HIMIC units.

In order to obtain a polyester resin (a) comprising unsaturated groups derived from an α,β-unsaturated acid in the polyester resin (a) one can use for example two different methods.

In a first production method for polyester (a), only part of the unsaturation derived from the α,β-unsaturated acid is reacted with cyclopentadiene (CPD) to form HIMIC units. For example only 80 % CPD is used in respect to the total amount of unsaturation derived from the α,β-unsaturated acid present in unsaturated polyester (a-1), to retain unsaturation derived from the α,β-unsaturated acid in unsaturated polyester (a). Using this production method, preferably the hydroxy value and the acid value of unsaturated polyester (a-1) is relatively low.

In a second method of production for polyester (a), at least part of the unsaturations derived from the α,β-unsaturated acid of the unsaturated polyester (a-1) are reacted to HIMIC units, followed by a post-reaction between the hydroxy-groups present in the unsaturated polyester (a-1) and an α,β-unsaturated carboxylic acid derivative. This way also unsaturation derived from the α,β-unsaturated acid can be obtained in unsaturated polyester (a). Examples of a suitable α,β-unsaturated carboxylic acid derivative is an anhydride, diester acid or monoester acid, for example diethylfumarate maleate, dimethylfumarate maleate. Using this production method, preferably the hydroxy value of unsaturated polyester (a-1) is relatively high, whilst the acid value is relatively low.

In the second method, preferably all unsaturations derived from the α,β-unsaturated acid of the unsaturated polyester (a-1) are reacted to HIMIC units. This can be achieved by use of an excess amount of cyclopentadiene (CPD).

WO98/46690 and WO 00/66671 describe a similar reaction process to the first production method and the second production method. However in the production process disclosed in these references an excess of CPD is present thus substantially preventing the unsaturated groups in polyester (a-1) derived from an α,β-unsaturated acid to remain in the polyester (a), making the reaction different from the first production method. Also the second production method according to the invention differs from the production method disclosed in these references, since the subsequent reaction with an α,β-unsaturated acid derivative to introduce unsaturated groups in the polyester is not disclosed therein. The polyester resin (a) of the present invention therefore differs from the polyester resins disclosed in WO 98/46690 and WO 00/66671 in the presence of unsaturated groups derived from an α,β-unsaturated acid.

Furthermore, these documents disclose the use of the produced resins in a crosslinking system wherein they are cured by crosslinking the resins with a crosslinker, such as for example phenolic compounds, at relatively high temperatures, in contrast to the present invention, where the unsaturated polyester resin is suitable for use in powder coatings comprising an initiator capable of being cured at relatively low temperatures.

The unsaturated polyester (a-1) is based on a reaction between at least an α,β-unsaturated acid and an alcohol.

The α,β-unsaturated acid used during production of the unsaturated polyester (a) can be any known α,β-unsaturated acid and/or its anhydride. Also mixtures of different α,β-unsaturated acids and/or their anhydrides may be used. The α,β-unsaturated acid may be a monoacid, di-acid or tri-acid. Examples of suitable α,β-unsaturated mono-acids are acrylic acid, methacrylic acid, crotonic acid, sorbic acid and cinnamic acid. Examples of suitable α,β-unsaturated di-acids may be maleic acid, maleic acid anhydride and fumaric acid. Examples of suitable α,β-unsaturated tri-acids are citraconic acid, citraconic acid anhydride, itaconic acid and itaconic acid anhydride.

Preferably the α,β-unsaturated acid is chosen from the group consisting of fumaric acid, maleic anhydride and/or crotonic adic. More preferably fumaric acid is used. Experiments have shown that unsaturated polyester (a) based on fumaric acid show very good curing properties.

In addition to the α,β-unsaturated acids other di-or polyvalent carboxylic acid or mixtures thereof may be used. Examples of suitable di- or polyvalent carboxylic acids include citraconic acid, malonic acid, succinic acid, glutaric acid, adipic acid, sebacic acid, 1,4-cyclohexane dicarboxylic acid, hexahydrophthalic acid, hexachloro endomethylene tetrahydrophthalic acid, dichlorophthalic acid, isophthalic acid, terephthalic acid and/or trimellitic acid or esters thereof. Preferably terephthalic acid is used additionally, since this acid has a beneficial effect on the glass transition temperature of the polyester (a). In a preferred embodiment of the invention, the unsaturated polyester (a-1) is based on at least fumaric acid and terephthalic acid as acid units.

The additional carboxylic acid can also be used in the form of an anhydride, for example tetrahydrophthalic anhydride, endomethylene tetrahydrophthalic anhydride, hexahydrophthalic anhydride, maleic anhydride or phthalic anhydride.

Generally the unsaturated polyester (a) is based on one or more aliphatic and/or cycloaliphatic mono-di- and/or polyvalent alcohols and one or more aliphatic, cycloaliphatic and/or aromatic di- or polyvalent carboxylic acids and/or esters derived therefrom.

Examples of suitable alcohols include benzyl alcohol, ethylene glycol, propylene glycol, neopentyl glycol, butane diol, hexane diol, dimethylol cyclohexane, diethylene glycol, glycerol, trimethylol-propane, pentaerythritol, dipentaerythritol, ethoxylated bisphenol A, for example hydrated bisphenol-A, 2,2-bis-(2-hydroxyethoxy)phenylpropane and/or propoxylated bisphenol A, for example 2,2-bis-2-hydroxypropoxy phenylpropane. Instead of or in addition to the alcohol compound(s) one or more epoxy compounds, such as for example ethylene oxide, propylene oxide and/or allylglycidyl ether or dicyclopentadiene may be used. Preferably, the alcohol used for producing the unsaturated polyester is ethylene glycol, propylene glycol and/or neopentyl glycol.

If desired also monocarboxylic acids may be applied. Optionally, saturated or unsaturated monocarboxylic acids, such as synthetic and/or natural fatty acids with 2 to 36 carbon atoms or esters prepared from these carboxylic acids and polyvalent alcohols such as glycerol may also be used. The presence of a monocarboxylic acid during polyester synthesis has a beneficial effect on the crosslinking efficiency of the final powder coating composition, especially for the first mentioned production method for polyester resin (a). Examples of suitable monocarboxylic acids are lauric acid, stearic acid, oleic acid, linoleic acid, benzoic acid, 4-methylbenzoic acid, phenyl-acetic acid, diethylfumarate, acrylic acid and/or methacrylic acid. Preferably benzoic acid is added. It has been shown that the addition of benzoic acid can have a beneficial effect to the glass transition temperature of the unsaturated polyester (a) and the powder stability.

The preparation of the unsaturated polyester (a-1) can take place via a one-step process or via a multi-step process.

If the unsaturated polyester (a-1) preparation takes place via a one-step process, glycols, acids, catalysts and optionally inhibitors can be esterified to the desired acid number or hydroxyl number at a temperature lower than 220°C. To remove low-molecular material or to obtain the desired acid number or hydroxyl number, optionally a vacuum can be applied at reduced temperature.

If the unsaturated polyester (a-1) preparation takes place in two steps, in the first step saturated acids, glycols, catalysts and inhibitors can be esterified at temperatures between, for example, about 210°C to about 260°C during for a period of about 2-10 hours, and in the second step the unsaturated compounds, acids and glycols can be esterified at temperatures between, for example, about 180°C to about 220°C for a period of about 5-16 hours. The monomers and the reaction conditions can be varied depending on the desired properties.

If desired the usual additives may be added during the preparation of unsaturated polyester (a-1), for example catalyst, stabilizers, for example anti-colorants or polymerisation inhibitors. An example of a suitable catalyst are Sn-based catalysts, for example FASCAT 4101. An example of a suitable anti-colorant is a phosphite. An example of suitable polymerisation inhibitors are hydroquinones, phenothiazine, lithiumhydroquinone.

Following the production of the unsaturated polyester (a-1), the reaction between CPD and the unsaturations of the α,β-unsaturated acid takes place. Preferably the following process is used in order to obtain HIMIC units.

Once the unsaturated polyester (a-1) has been obtained, dicyclopentadiene (DCPD) is added to the unsaturated polyester at temperatures between about 160 °C and about 220 °C resulting in a retro Diels-Alder reaction forming CPD. Next the CPD and the unsaturated groups derived from the α,β-unsaturated acid react by forming HIMIC units. This yields a group in the polyester according to formula I: 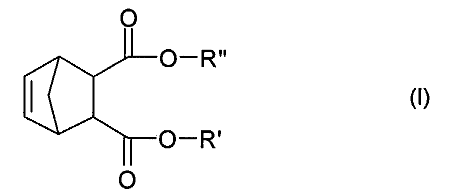 wherein R' and R" are the same or different, part of the unsaturated polyester (a).

This reaction is thus significantly different from a simple adduction of DCPD to the molecule which results in the structural formula as depicted in formula II or formula III: 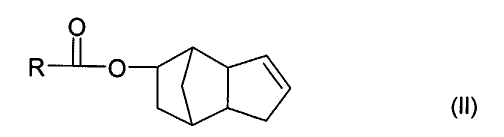 wherein R is a polyester. 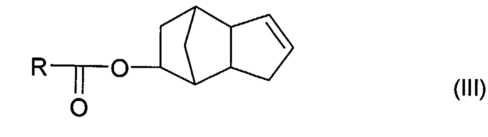 wherein R is a polyester.

As can be seen in formula's II and III, the resulting product in the adduction reaction of DCPD does not form HIMIC units in contrast to the process according to the invention, which yields groups according to formula I.

The presence of HIMIC units in the unsaturated polyester according to the invention is also crucial for obtaining the desired coating properties.

The powder coating composition according to the invention furthermore comprises initiator (b). The initiator is employed to generate free radicals and induce cross-linking of the unsaturated polyester resin (a) during curing of the coating upon heating. Such initiator is also called a thermal initiator. Suitable thermal initiators are preferably solids at room temperature. Examples of suitable thermal initiators are peroxide and azo compounds. Preferably peroxides are used.

Examples of suitable azo compounds include 2,2'-azobis(isobutyronitrile) and 2,2'-azobis(2-methylbutyronitrile).

Examples of suitable peroxide initiators include peroxy ketals, dicayl peroxides, peroxy esters, dialkylperoxides, ketone peroxides. Examples of suitable peroxide initiators are cumylperoxyneodecanoate, 2,4,4-trimethylpentyl-2 peroxyneodecanoate, tert-amyl peroxyneodecanoate, bis(4-tert-butylcyclohexyl) peroxydicarbonate, bis(2-ethylhexyl)peroxydicarbonate, tert-butyl peroxyneodecanoate, dibutyl peroxydicarbonate, dicetyl peroxydicarbonate, dimyristyl peroxydicarbonate, tert-amyl peroypivalate, tert-butyl peroxypivalate, bis(3,5,5-trimethylhexanoyl) peroxide, dilauroyl peroxide, didecanoyl peroxide, 2,5-bis(2-ethylhexanoylperoxy)-2,5-dimethylhexane, tert-amyl proxy-2-ethylhexanoate, dibenzoyl peroxide, tert-butyl peroxy-2-ethylhexanote, tert-butyl peroxydiethylacetate, 1,4-bis(tert-butylperoxycarbo)cyclohexane, tert-butyl peroxyisobutanoate, 1,1-bis(tert-butylperoxy)-3,3,5-trimethylcyclohexane, 1,1-bis(tert-butylperoxy)cyclohexane, tert-butyl peroxy-3,5,5-trimethylhexanoate, 2,2-bis(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide, dicumyl peroxide, bis(tert-butylperoxyisopropyl)benzene, 2,5-bis(tert-butylperoxy)-2,5-dimethylhexane, tert-butyl cumyl peroxide,2,5-bis(tert-butylperoxy)-2,5-dimethyl-3-hexyne, di-tert-butyl peroxide, diisopropylbenzene monohydroperoxide, cumyl hydroperoxide, tert-butyl hydroperoxide.

Preferably dilauroylperoxide, dibenzoylperoxyde, tert-butyl peroxy-2-ethylhexanoate, 1,4-bis(tert-butylperoxycarbo)cyclohexane, 1,1-bis(tert-butylperoxy)-3,3,5-trimethyicyciohexane, 1,1-bis(tert-butylperoxy)cyclohexane, tert-butyi peroxy-3,5,5-trimethylhexanoate, 2,2-bis(tert-butylperoxy)butane, tert-butylperoxy isopropyl carbonate, tert-butylperoxy 2-ethylhexyl carbonate, tert-butyl peroxyacetate, tert-butyl peroxybenzoate is/are used.

Most preferably at least one initiator chosen from the group consisting of dilauroylperoxide, dibenzoylperoxyde, tert-butyl peroxy-2-ethylhexanoate, 1,4-bis(tert-butylperoxycarbo)cyclohexane, 1,1-bis(tert-butylperoxy)-3,3,5-trimethylcyclohexane, 1,1-bis(tert-butylperoxy)cyclohexane is/are used.

Also mixtures of peroxides may be used. In this case, preferably the half-life time of the peroxides differs. This may have a beneficial effect on the curing properties of the powder coating composition.

Peroxides with a half-life time of 0.1 hour at a temperature between 75°C and 200°C are especially suitable to initiate the cure of the unsaturated polyester (a), examples of such peroxides are disclosed in for example 'Initiators for high polymers' (brochure by AKZO Nobel). Preferably initiators with a half-life time of 0.1 hour at a temperature between 90°C and 140°C are used in the powder coating composition according to the invention. Most preferably the initiator has a half-life time of 0.1 hour at a temperature between 100°C and 130°C. It has been found that the use of metal salts in some cases can lower the temperature of the half-life time of the peroxides.

Preferably, the amount of initiator (b) is at most 5 wt% with respect to the polyester (a).

Optionally a third unsaturated component (c) may be used in the composition. Surprisingly it was found that the presence of even a relatively small amount of an additional unsaturated component (c) has a desirable influence on the reactivity of the powder coating paint composition. Examples of suitable unsaturated components are vinyl compounds or allyl compounds. Preferably the unsaturated component (c) is an allyl compound. Examples of suitable allyl compounds are triallyltrimelitate, trimetylolpropyltri(meth)acrylate, triallylisocyanurate, triallylcyanurate, ethyleneglycoldimethacrylate and mixtures of any of them. Preferably triallylcyanurate is used. Preferably compound (c) is present in at most 5 wt% with respect to the weight of compounds (a) and (b).

The powder coating composition according to the invention can, if desired, include customary additives such as, for example, pigments, fillers, degassing agents, flow agents and stabilizers.

Suitable pigments include without limitation inorganic pigments, such as for example titanium dioxide, zinc sulphide, iron oxide and chromium oxide, as well as organic pigments, such as for example azo compounds. Suitable fillers include, for example, metal oxides, silicates, carbonates and sulphates.

Suitable stabilizers, include, for example, of primary and/or secondary antioxidants, UV stabilizers such as, for example, quinones, (sterically hindered) phenolic compounds, phosphonites, phosphites, thioethers and HALS compounds (hindered amine light stabilizers).

Surprisingly has been found that the powder coating composition according to the invention usually does not need degassing agents. If still desired for specific applications cyclohexane dimethanol bisbenzoate and the like are suitable degassing agents.

Suitable flow agents include for example, polyalkyl acrylates, fluorohydrocarbons and silicon oils. Other suitable additives include, for example, additives for improvement of the tribo-electric charging properties, such as sterically hindered tertiary amines, which are described in EP-B-371528.

The powder coating composition according to the invention can be prepared with any generally known process for the preparation of powder coating compositions. A more general description of how powder coating compositions can be prepared is described by Misev in Powder Coatings, Chemistry and Technology (1991, John Wiley) on pages 224-226. Care should however be taken with the temperature in used mixing equipment during the production of the powder coating composition. The temperature of the powder coating composition in the mixing equipment should be about 20 °C lower than the half-life time temperature at 0.1 hour of the used initiator, in order to prevent early initiation of the powder coating composition. The half-life time temperature at 0.1 hour of the initiator can be requested at the producer of the desired initiator, or found in for example 'Initiators for high polymers' (brochure by AKZO Nobel). This enables the person skilled in the art to determine the maximal mixing temperature easily. In case several initiators are used, the temperature of the powder coating composition in the mixing equipment should be at least about 20 °C lower than the lowest half-life temperature at 0.1 hour of the used initiators. Suitable mixing equipment is for example an extruder or a batch mixer. Preferably an extruder is used.

Powder coating compositions according to the invention can be applied in the customary manner, for example by electrostatic spraying of the powder onto an earthed substrate and curing of the coating by exposure to heat at a suitable temperature during a sufficiently long period depending on for example the substrate. The powder coating composition applied can, for example, be heated in a hot air oven or by means of infrared radiation (a so-called IR oven). The time the substrate is placed in an oven is called the cure time.

The preferred cure time in a hot air oven is less than 40 minutes, more preferably less than 30 minutes. Preferably the cure time in a hot air oven is at least 10 minutes in a hot air oven. The preferred cure time in an IR oven is less than 20 minutes, more preferably less than 15 minutes. Preferably the cure time in an IR oven is at least 5 minutes in an IR oven.

Compositions according to the present invention can be used in powder coatings intended for use on metal, wood, paper and plastic substrates. The powder coating composition according to the invention shows exceptionally good coating properties at low temperatures, with respect to the conventionally available coating systems. The powder coating composition is therefore very suitable for heat sensitive substrates such as wood, paper and plastics. The advantage of this coating composition is that it can be used at a broad temperature range, and therefore also is suitable for coating less heat-sensitive substrates, for example metals, at higher temperatures.

For heat sensitive substrates the curing temperature is preferably lower than 150 °C, more preferably lower than 140 °C, even more preferably lower than 120 °C and most preferably including and lower than 110 °C. With the powder coating composition according to the invention even good coatings can be obtained at temperatures from 100 °C. Preferably, the curing temperature for heat-sensitive substrates is between 120 and 100 °C. Examples of cure time - curing temperature combinations suitable for the powder coating composition according to the invention are, 5 minutes at 140°C, 10 minutes at 130 °C, 20 minutes at 120 °C and 30 minutes at 110 °C. The desired combination also depends on the type of oven used and the type of substrate used.

The invention also relates to a substrate fully of partly coated with the cured powder coating composition according to the invention.

## Claims

1. Unsaturated polyester (a) comprising endomethylenetetrahydrophthalic acid (HIMIC) units, **characterised in that** the polyester comprises at least 1.1 mmol unsaturation per gram polymer, whereof at least 1 mmol originates from the HIMIC units and at least 0.01 mmol is derived from an α,β-unsaturated acid.

2. Powder coating composition comprising
(a) Unsaturated polyester comprising endomethylenetetrahydrophthalic acid units (HIMIC)
(b) Initiator

3. Powder coating composition according to claim 2, **characterised in that** polyester (a) comprises unsaturated groups derived from an α,β-unsaturated acid.

4. Powder coating composition according to claim 2, **characterised in that** polyester (a) is a polyester according to claim 1.

5. Powder coating composition according to any one of claims 2 to 4, **characterised in that** the powder coating composition comprises a third unsaturated compound (c).

6. Process for preparing an unsaturated polyester (a), comprising the steps of first preparing an unsaturated polyester (a-1), based on at least α,β-unsaturated acid and alcohol, followed by a second step wherein part of the unsaturations of the unsaturated acid is reacted with cyclopentadiene (CPD) at a temperature between about 160 °C and 220 °C thereby forming HIMIC units **characterized in that** an excess of fumaric unsaturations with respect to CPD is present in the unsaturated polyester (a-1).

7. Process for preparing an unsaturated polyester (a), comprising the steps of first preparing an unsaturated polyester (a-1), based on at least α,β-unsaturated acid and alcohol, followed by a second step wherein at least part of the unsaturations of the unsaturated acid is reacted with cyclopentadiene (CPD) at a temperature between about 160 °C and 220 °C thereby forming HIMIC units followed by a post reaction botween the hydroxy-groups present in the unsaturated polyester (a-1) and an α,β-unsaturated carboxylic acid derivative.

8. Process for the preparation of a powder paint composition according to any one of claims 2 to 5, wherein the components are mixed in an extruder at a temperature about 20 °C lower than the half-life time temperature at 0.1 hour of the used initiator.

9. Process for preparing a coating by curing a powder coating composition according to any one of claims 2 to 5 applied on a substrate at a temperature between 100 °C and 120 °C.

10. Substrate coated fully or partly with a cured powder paint composition according to any one of claims 2 to 5.
